## Europäisches Patentamt

(19) **European Patent Office**

**Office européen des brevets**

(11) Veröffentlichungsnummer: **0 099 969**
**B1**

(12) **EUROPÄISCHE PATENTSCHRIFT**

(45) Veröffentlichungstag der Patentschrift:
**10.12.86**

(51) Int. Cl.⁴: **F 16 N 7/34**

(21) Anmeldenummer: **83104938.2**

(22) Anmeldetag: **19.05.83**

(54) **Vorrichtung zur Aufbereitung von Druckluft.**

(30) Priorität: **24.07.82 DE 3227691**

(43) Veröffentlichungstag der Anmeldung:
**08.02.84 Patentblatt 84/6**

(45) Bekanntmachung des Hinweises auf die Patenterteilung:
**10.12.86 Patentblatt 86/50**

(84) Benannte Vertragsstaaten:
**AT BE CH FR GB IT LI LU NL SE**

(56) Entgegenhaltungen:
**US - A - 2 899 018**
**US - A - 3 086 617**
**US - A - 3 572 469**
**US - A - 3 945 465**

(73) Patentinhaber: **Armaturen- und Autogengerätefabrik
ewo Hermann Holzapfel KG, Hessbrühlstrasse 45-47,
D-7000 Stuttgart 80 (DE)**

(72) Erfinder: **Baumann, Hans, Stossäckerstrasse 60,
D-7000 Stuttgart 80 (DE)**

(74) Vertreter: **Hoeger, Stellrecht & Partner,
Uhlandstrasse 14c, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Aufbereitung von Druckluft mit Ventilgehäuse sowie Luftein- und Luftauslasskanal, wobei ein Filter mit Filterkörper und Filterbehälter, ein Druckminderventil mit Regulierspindel, ein Nebelöler mit druckluftbeaufschlagtem Ölgefäss, Ölregulierventil und Vernebelungsdüse sowie ein Manometer zu einer Baueinheit verbunden, Filterbehälter und Ölgefäss einstückig ausgebildet und gemeinsam an der Unterseite des Ventilgehäuses angeordnet sind und das Ölgefäss exzentrisch zum Filterbehälter liegt und diesen teilweise umschliesst.

Bei einer bekannten Vorrichtung dieser Art (US-A 3 086 617) ist die Vernebelungsdüse nicht im Ventilgehäuse, sondern separat angeordnet und es fehlt ein mit dieser Düse zusammenwirkendes Öltropfenschauglas, an dem die Menge des der Druckluft zudosierten Öls überprüft werden kann. Das im wesentlichen quaderförmig ausgebildete Ölgefäss weist an seiner Oberseite eine Aussparung auf, die als Filterbehälter dient. Die Vorrichtung ist verhältnismässig sperrig und wegen der fehlenden Möglichkeit, die Dosierungsmenge des zugegebenen Öls laufend zu überprüfen, im Betrieb nicht ganz einfach zu bedienen.

Es ist Aufgabe der Erfindung, eine gattungsgemässe Vorrichtung kompakt, platzsparend und bedienungsfreundlich auszubilden.

Die Aufgabe wird erfindungsgemäss durch folgende Merkmale gelöst:

a) die Vernebelungsdüse ist im Ventilgehäuse angeordnet und über ein ebenfalls an diesem Gehäuse vorgesehenes Öltropfenschauglas sowie über das Ölregulierventil mit dem Ölgefäss verbunden;

b) der Filterbehälter und das Ölgefäss sind im wesentlichen als parallele Zylinder mit verschiedenen Durchmessern ausgebildet.

Besondere Ausführungsarten der Erfindung sind in den abhängigen Ansprüchen angegeben.

Aus der US-A 2 899 018 ist zwar eine einstückige Konstruktion eines Filterbehälters und Ölgefässes bei einer Druckluftaufbereitungsvorrichtung bekannt geworden mit parallelen Zylindern verschiedenen Durchmessers, jedoch weist diese Vorrichtung weder ein Druckminderventil mit Regulierspindel, noch ein Öltropfenschauglas, noch ein Manometer auf, so dass sie mit der erfindungsgemässen Vorrichtung ihrer Zweckbestimmung nach nicht zu vergleichen ist.

Die nachstehende Beschreibung einer bevorzugten Ausführungsform der Erfindung dient im Zusammenhang mit beiligender Zeichnung der weiteren Erläuterung. Es zeigen:

Fig. 1 eine Seitenansicht einer Vorrichtung zur Aufbereitung von Druckluft;

Fig. 2 eine Draufsicht der Vorrichtung aus Fig. 1;

Fig. 3 eine Schnittansicht entlang der Linie 3-3 in Fig. 2;

Fig. 4 Schnittansichten entlang den Linien 4-4 bzw. 5-5 in Fig. 3 und

Fig. 6 eine Schnittansicht entlang der Linie 6-6 in Fig. 2.

Die im nachstehenden beschriebene Vorrichtung zur Aufbereitung von Druckluft ist als kombinierte Wartungseinheit aufgebaut und umfasst zur Aufbereitung der Druckluft ein Filter, einen Druckminderer und einen Nebelöler, die zu einer Baueinheit verbunden sind. Das Filter dient zur Abscheidung von festem oder flüssigem Schmutz aus der aufzubereitenden Druckluft, mit Hilfe des Druckminderers lässt sich ein gewünschter Betriebsdruck einstellen, der Nebelöler ermöglicht es, der aufbereiteten Druckluft in dosierter Weise Öltröpfchen beizumischen, die der Schmierung druckluftbetätigter Apparate dienen.

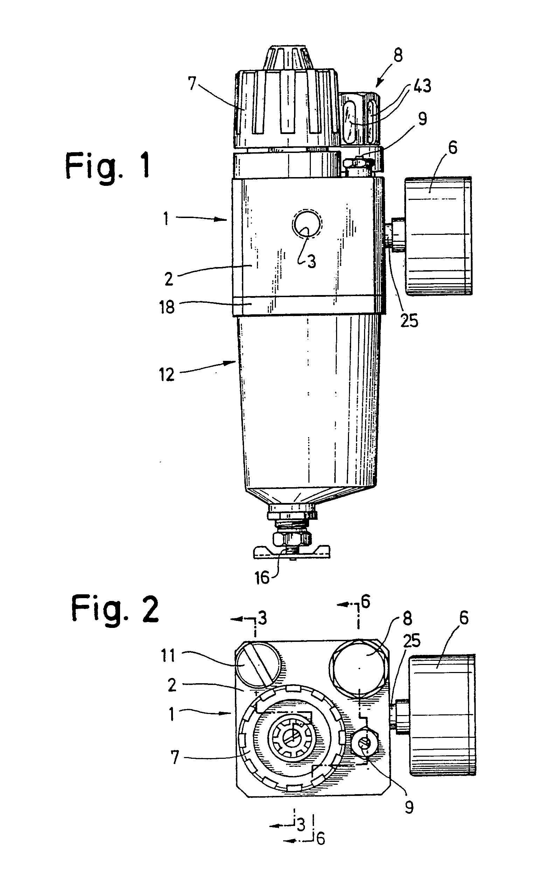

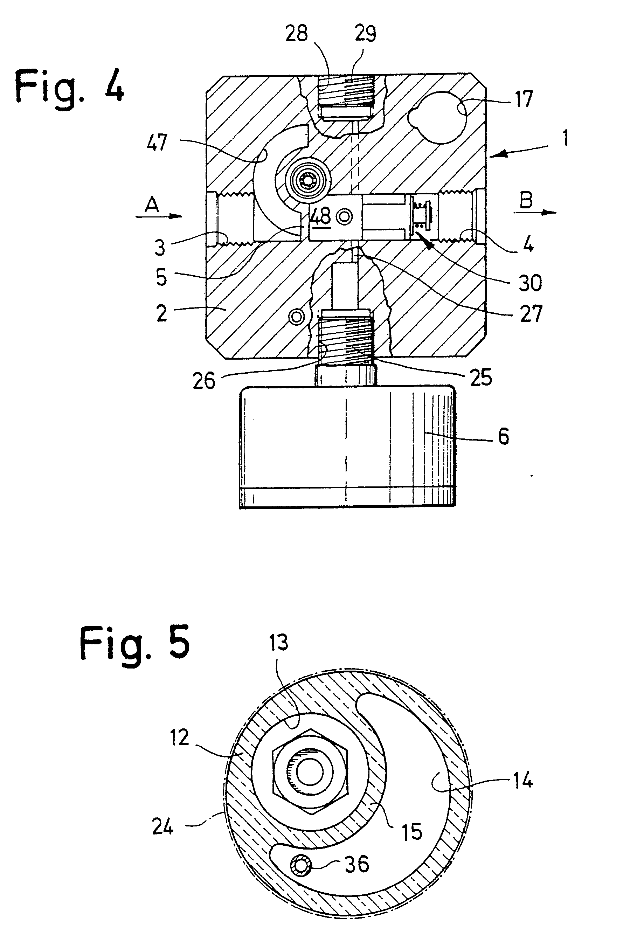

Der grundsätzliche Aufbau der Vorrichtung ergibt sich aus den Figuren 1, 2 und 4. Ein Ventilgehäuse 1 in Gestalt eines mit ebenen Aussenflächen versehenen, würfelförmigen Blockes 2 weist einen an der einen Seitenfläche austretenden Lufteinlasskanal 3 sowie einen an der gegenüberliegenden Seitenfläche austretenden Luftauslasskanal 4 (Fig. 4) auf. Die Druckluft tritt in Richtung des Pfeiles A in das Gehäuse 1 ein und in Richtung des Pfeiles B aus dem Gehäuse wieder aus. Lufteinlasskanal 3 und Luftauslasskanal 4 sind durch eine in Fig. 4 mit dem Bezugszeichen 5 bezeichnete Wand voneinander getrennt. Bevor die durch den Einlasskanal 3 eingetretene Luft das Ventilgehäuse 1 durch den Auslasskanal 4 wieder verlässt, wird sie in an sich bekannter Weise gefiltert, in ihrem Druck gemindert und mit Öl beaufschlagt.

Ein mit dem Luftauslasskanal 4 in Verbindung stehendes Manometer 6 zeigt den Druck der austretenden Druckluft an. Dieser Druck kann mittels eines an der Oberseite des Ventilgehäuses 1 vorgesehenen Drehknopfes 7, der mit einer Regulierspindel eines Druckminderventils verbunden ist, eingestellt werden. Ein ebenfalls an der Oberseite des Ventilgehäuses 1 angeordnetes Öltropfenschauglas 8 gestattet es, die der austretenden Druckluft beigefügte Ölmenge zu beobachten. Die beigegebene Ölmenge lässt sich mit Hilfe eines Ölregulierventils, dessen Einstellschraube 9 ebenfalls an der Oberseite des Ventilgehäuses 1 angeordnet ist, einstellen. Schliesslich befindet sich an der Oberseite des Ventilgehäuses 1 noch eine Öleinfüllschraube 11, nach deren Abnahme Öl in die Vorrichtung nachgefüllt werden kann.

An der Unterseite des Ventilgehäuses 1 ist als einstückiger Bauteil 12 – vgl. auch Fig. 5 – ein mit einem Filterbehälter 13 kombiniertes Ölgefäss 14 angeordnet. Der Teil 12 ist im wesentlichen kreiszylindrisch ausgebildet und enthält zwei von einer ebenfalls kreiszylindrischen Zwischenwand 15 getrennte Kammern, welche den Filterbehälter 13 bzw. das Ölgefäss 14 bilden. Das Ölgefäss 14 liegt zum Filterbehälter 13 exzentrisch und umschliesst diesen teilweise. Das Teil 12 ist aus durchsichtigem, massivem Kunststoff hergestellt, so dass die Höhe etwaiger Filterrückstände im Behälter 13 und der Ölstand im Gefäss 14 von aussen leicht beobachtet werden können.

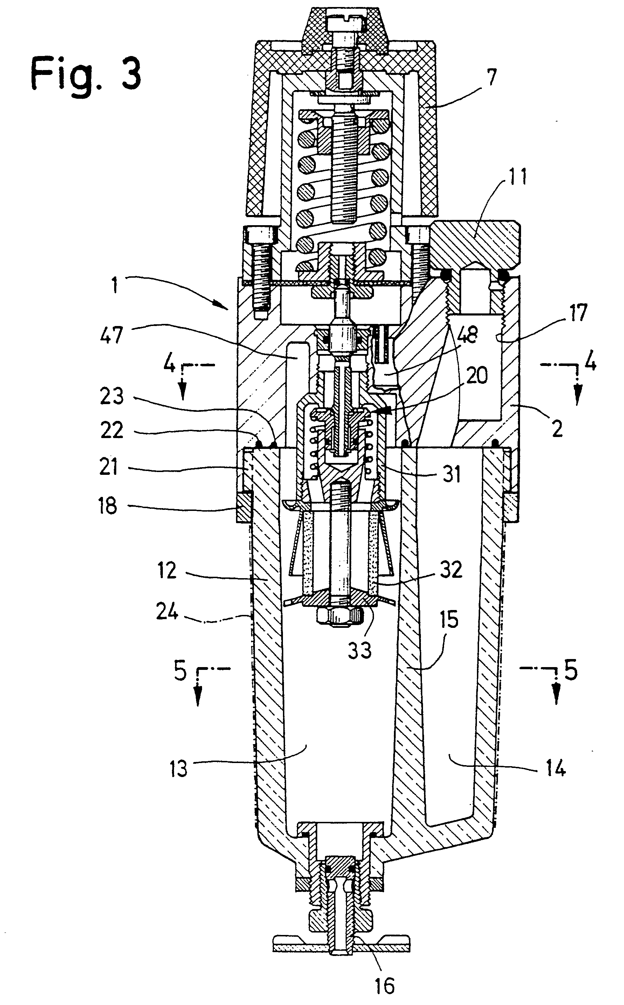

An der Unterseite des Teils 12 ist eine Ablassschraube 16 vorgesehen, nach deren Abnahme Filterrückstände aus dem Behälter 13 abgelassen werden können. Das Ölgefäss 14 steht natürlich mit einer durch die bereits erwähnte Öleinfüllschraube 11 verschlossenen Einfüllbohrung 17 (Fig. 3 und 4) in Verbindung.

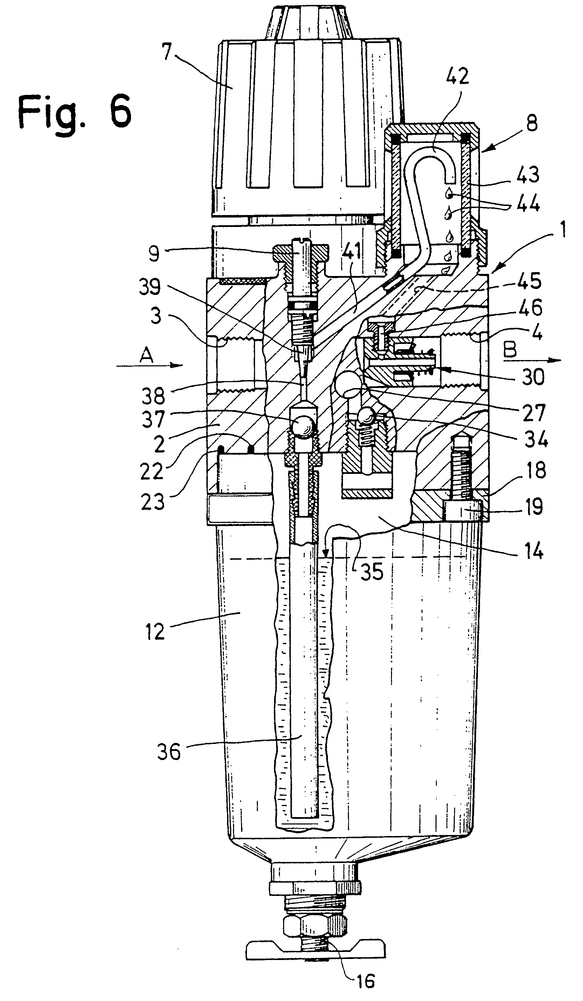

Das den Filterbehälter 13 und das Ölgefäss 14 enthaltende, einstückige Bauteil 12 ist mittels eines aussen der Form des Blockes 2 angepassten Ringes 18 am Ventilgehäuse 1 gehalten, wobei der Ring 18 durch an den vier Ecken des Blockes 2 vorgesehene Schrauben 19 mit dem Ventilgehäuse 1 verbunden ist (Fig. 6). Wie aus Fig. 3 hervorgeht, sind in der Nähe des oberen Randes des Bauteils 12 seitlich abstehende Stege 21 vorgesehen, an denen der Ring 18 angreift. Beim Festziehen der Schrauben 19 wird die oben liegende Stirnfläche des Bauteils 12 gegen eine entsprechende Innenfläche des Ventilgehäuses 1 angepresst. Zwei exzentrisch zueinander angeordnete Dichtringe 22, 23 dienen der getrennten Abdichtung von Filterbehälter 13 und Ölgefäss 14.

Durch die beschriebene Vereinigung von Filterbehälter 13 und Ölgefäss 14 und die gemeinsame Anbringung an der Unterseite des Ventilgehäuses 1 ergibt sich ein platzsparender, störungssicherer Aufbau der Vorrichtung. Da der Filterbehälter 13 exzentrisch zur Achse der Vorrichtung und zum Ölgefäss 14 liegt, kann der Drehknopf 7 und die mit ihm verbundene Regulierspindel des Druckminderventils im wesentlichen in die Nähe einer Ecke bzw. Kante des Blockes 2 verlegt werden. Hierdurch ergibt sich an der gegenüberliegenden Ecke der Oberseite des Blockes 2 (vgl. Fig. 2) Platz für das Öltropfenschauglas 8, so dass dieses ebenfalls platzsparend untergebracht ist und die Gesamtkontur der Vorrichtung nicht vergrössert. An zwei weiteren, ebenfalls einander diagonal gegenüberliegenden Eckenbereichen der Oberseite des Blockes 2 sind wiederum platzsparend die Einstellschraube 9 des Ölregulierventils sowie die Öleinfüllschraube 11 angeordnet. Auch der Drehknopf 7 und das Öltropfenschauglas 8 liegen, vgl. Fig. 2, auf einer Diagonalen der Oberseite des würfelförmigen Blockes 2.

Wie insbesondere aus Fig. 3 und 5 hervorgeht, können die aus durchsichtigem Kunststoff bestehenden Wände von Filterbehälter 13 und Ölgefäss 14 verhältnismässig stark ausgebildet werden. Falls erforderlich, kann jedoch zur Erzielung zusätzlicher Sicherheit das Bauteil 12 insgesamt von einem gemeinsamen, z.B. aus Metall bestehenden Schutzmantel 24 umgeben sein, der in Fig. 3 strichpunktiert dargestellt ist. Dieser Schutzmantel 24 weist in an sich bekannter Weise Öffnungen auf, die eine Beobachtung der Innenräume des Filterbehälters 13 und des Ölgefässes 14 durch die Wände des Bauteils 12 hindurch gestatten. Der vorzugsweise einstückig gefertigte Bauteil 12 könnte auch aus Metall bestehen, wobei dann in seinen Wänden Schaugläser zur Beobachtung der Innenräume von Filterbehälter 13 und Ölgefäss 14 angeordnet werden müssen.

Wie aus Fig. 4 ersichtlich, ist das Manometer 6 mittels eines Schraubstutzens 25 in eine Gewindebohrung 26 des Blockes 2 eingeschraubt. Die Gewindebohrung 26 ist über einen den Luftauslasskanal 4 kreuzenden Kanal 27 mit einer an der gegenüberliegenden Aussenfläche des würfelförmigen Blockes 2 vorgesehenen Gewindebohrung 28 verbunden, in die das Manometer 6 wahlweise einschraubbar ist. Auf diese Weise kann die beschriebene Vorrichtung nicht nur so, wie in Fig. 4 dargestellt, also mit von links her eintretender und nach rechts hin austretender Luft installiert, sondern auch in entgegengesetzter Durchflussrichtung verwendet werden, wobei die Montage der Vorrichtung an jeweils derjenigen Aussenfläche des Blockes 2 stattfindet, die dem Manometer 6 gegenüberliegt. Die jeweils nicht mit dem Manometer 6 verbundene Gewindebohrung 26 bzw. 28 wird in bekannter Weise durch einen Schraubstopfen 29 verschlossen. Wegen der beschriebenen, und insbesondere aus Fig. 2 ersichtlichen Anordnung der Teile 7, 8, 9 und 11 kann auch bei einer gegenüber Fig. 4 um 180° verdrehten Anordnung die Vorrichtung leicht bedient und insbesondere das Öltropfenschauglas 8 bequem beobachtet werden.

Nachstehend werden weitere Konstruktions- und Funktionsdetails der Vorrichtung beschrieben, wobei an sich bekannte Merkmale ausser Betracht bleiben:

Wie insbesondere aus Fig. 3 hervorgeht, trägt ein in den Block 2 eingeschraubter Einsatz 31 einen zylindrischen Filterkörper 32, der an seiner Unterseite durch einen Boden 33 verschlossen ist. Im Innern des Einsatzes 31 befindet sich in an sich bekannter Weise das eigentliche Druckminderventil 20, welches von an sich bekannter Bauart ist und daher hier nicht beschrieben zu werden braucht. Mittels des Drehknopfes 7 lässt sich der Druck der durch den Kanal 4 (Fig. 4 und 6) austretenden Luft einstellen.

Wie ebenfalls aus Fig. 4 und 6 hervorgeht, ist im Luftauslasskanal 4 eine ebenfalls an sich bekannte Vernebelungsdüse 30 angeordnet, welche von der austretenden Druckluft durchströmt wird. Der dem Anschluss des Manometers dienende, den Luftauslasskanal 4 kreuzenden Kanal 27 ist über ein Rückschlagventil 34 mit dem Ölgefäss 14 verbunden (Fig. 6). Somit wirkt der Druck der austretenden Luft auch auf die Oberfläche 35 des im Ölgefäss 14 stehenden Öles, welches hierdurch über ein Steigrohr 36 mit Rückschlagventil 37 nach oben gedrückt wird. Hinter dem Steigrohr 36 ist in einem entsprechenden Kanal 38 ein durch die Einstellschraube 9 einstellbares Ölregulierventil 39 in Gestalt eines Nadelventils angeordnet. An das Ventil 39 schliesst sich ein Kanal 41 an, der mit einem etwa S-förmig gekrümmten Rohr 42 verbunden ist, welches sich seinerseits innerhalb des Öltropfenschauglases 8 befindet. Durch die Scheiben 43 des Öltropfenschauglases 8 kann die Zahl der aus dem Rohr 42 austretenden Öltröpfchen 44 und damit die Strömungsmenge des Öls beobachtet werden. Die Strömungsmenge ist durch das Ölregulierventil 39 einstellbar. Das aus dem Rohr 42 ausgetretene Öl gelangt über Kanäle 45 und 46 in die Vernebelungsdüse 30, wo es unter der Wirkung der durchströmenden Druckluft vernebelt und mitgerissen wird.

Zum besseren Verständnis wird anschliessend noch einmal der Strömungsweg der die Vorrichtung durchfliessenden Luft beschrieben:

Die in den Einlasskanal 3 (Fig. 4 und 6) eintretende Druckluft gelangt in einen halbkreisringförmigen Raum 47 (Fig. 3 und 4). Von da fliesst die Luft zum Filterkörper 32 und nach dessen Durchdringung, wobei Rückstände festgehalten und im Filterbehälter 13 gesammelt werden, über das Druckminderventil 20 in einen Raum 48, der seinerseits mit der Vernebelungsdüse 30 in Verbindung steht (Fig. 3 und 4). Anschliessend erfolgt der Austritt der Druckluft aus dem Auslasskanal 4.

## Patentansprüche

1. Vorrichtung zur Aufbereitung von Druckluft mit Ventilgehäuse (1) sowie Luftein- und Luftauslasskanal (3, 4), wobei ein Filter mit Filterkörper (32) und Filterbehälter (13), ein Druckminderventil (20) mit Regulierspindel, ein Nebelöler mit druckluftbeaufschlagtem Ölgefäss (14), Ölregulierventil (39) und Vernebelungsdüse (30) sowie ein Manometer (6) zu einer Baueinheit verbunden, Filterbehälter (13) und Ölgefäss (14) einstückig ausgebildet und gemeinsam an der Unterseite des Ventilgehäuses (1) angeordnet sind und das Ölgefäss (14) exzentrisch zum Filterbehälter (13) liegt und diesen teilweise umschliesst, gekennzeichnet, durch folgende Merkmale:

a) die Vernebelungsdüse (30) ist im Ventilgehäuse (1) angeordnet und über ein ebenfalls an diesem Gehäuse (1) vorgesehenes Öltropfenschauglas (8) sowie über das Ölregulierventil (39) mit dem Ölgefäss (14) verbunden;

b) der Filterbehälter (13) und das Ölgefäss (14) sind im wesentlichen als parallele Zylinder mit verschiedenen Durchmessern ausgebildet.

2. Vorrichtung nach Anspruch 1, dadurch gekennzeichnet, dass das Ventilgehäuse (1) als ein mit ebenen Aussenflächen versehener Block (2) ausgebildet ist, in dessen oben liegenden Eckenbereichen ein mit der Regulierspindel des Druckminderventils (20) verbundener Drehknopf (7) und das Öltropfenschauglas (8) im wesentlichen einander diagonal gegenüberliegend angeordnet sind.

3. Vorrichtung nach Anspruch 2, dadurch gekennzeichnet, dass in weiteren, oben liegenden Eckenbereichen des Blockes (2) eine Einstellschraube (9) des Ölregulierventils (39) und/oder ein Öleinfüllkanal (17) mit Einfüllschraube (11) vorgesehen sind.

4. Vorrichtung nach einem der Ansprüche 1 bis 3, dadurch gekennzeichnet, dass Filterbehälter (13) und Ölgefäss (14) von einem gemeinsamen Schutzmantel (24) umgeben sind.

5. Vorrichtung nach einem der voranstehenden Ansprüche, dadurch gekennzeichnet, dass Filterbehälter (13) und Ölgefäss (14) mindestens teilweise aus durchsichtigem Material bestehen.

6. Vorrichtung nach einem der voranstehenden Ansprüche, dadurch gekennzeichnet, dass das als Block (2) ausgebildete Ventilgehäuse (1) einen durchgehenden, den Luftauslasskanal (4) kreuzenden Kanal (27) aufweist, und dass das Manometer (6) wahlweise mit an gegenüberliegenden Blockseiten angeordneten Gewindebohrungen (26, 28) des Kanals (27) verbindbar ist.

## Claims

1. Device for treating compressed air, with a valve body (1) and air inlet and outlet ports (3, 4), a filter with filter pad (32) and filter container (13), a pressure reducing valve (20) with a regulating spindle, an oil-mist spray with a compressed air pressurized oil reservoir (14), oil regulating valve (39) and atomizing jet (30) and a pressure gauge (6) are combined into one unit, filter container (13) and oil reservoir (14) being constructed in one piece and being located jointly on the underside of the valve body (1), the oil reservoir (14) being eccentrically positioned in relation to the filter container (13) which it partially surrounds, characterized by the following features:

a) the atomizing jet (30) is located in the valve body and is connected to the oil reservoir (14) via an oil drip sight glass (8) likewise provided in this body (1) and also via the oil regulating valve (39);

b) the filter container (13) and the oil reservoir (14) are constructed substantially as parallel cylinders having different diameters.

2. Device according to Claim 1, characterised in that the valve body (1) is constructed as a block (2) having plane external surfaces and in the top corner regions of which there are a rotary knob (7) connected to the regulating spindle of the pressure reducing valve (20) and the oil drip sight gauge (8), knob (7) and glass (8) being substantially diagonally opposite each other.

3. Device according to Claim 2, characterised in that in further top corner regions of the block (2) there are a setscrew (9) for the oil regulating valve (39) and/or an oil filler port (17) with a filler screw (11).

4. Device according to one of Claims 1 to 3, characterised in that the filter container (13) and oil reservoir (14) are enclosed by a common protective casing (24).

5. Device according to one of the preceding Claims, characterised in that filter container (13) and oil reservoir (14) consist at least partially of transparent material.

6. Device according to one of the preceding Claims, characterised in that the valve body (1) constructed as a block (2) comprises a continuous passage (27) crossing the air outlet passage (4), and in that the pressure gauge (6) can be connected optionally to threaded bores (26, 28) of the port (27), disposed on opposite sides of the block.

**Revendications**

1. Dispositif pour le traitement d'air comprimé comportant un carter de soupape (1), un canal d'entrée d'air et un canal de sortie d'air (3, 4), dans lequel un filtre avec un corps de filtre (32) et une boîte à filtre (13), une soupape de réduction de pression (20) avec une tige régulatrice, un nébulisateur d'huile avec un récipient à huile (14) alimenté en air comprimé, une vanne de réglage du débit d'huile (39) et une buse nébulisatrice (30) ainsi qu'un manomètre (6) sont reliés pour constituer un ensemble, la boîte à filtre (13) et le récipient à huile (14) étant formés d'une seule pièce et aménagés ensemble au fond du carter de soupape (1), le récipient à huile (14) étant agencé d'une façon excentrique par rapport à la boîte à filtre (13) et entourant partiellement celle-ci, caractérisé en ce que:

a) la buse nébulisatrice (30) est agencée dans le carter de soupape (1) et relié au récipient à huile (14) par un verre indicateur de gouttes d'huile (8) également agencé sur ledit carter (1) et par la vanne de réglage (39) du débit d'huile;

b) la boîte à filtre (13) et le récipient à huile (14) sont essentiellement sous la forme de cylindres parallèles ayant des diamètres différents.

2. Dispositif selon la revendication 1, caractérisé en ce que le carter de soupape (1) est sous la forme d'un bloc (2) pourvu de surfaces externes planes, dans les régions d'angle supérieures duquel sont agencés un bouton tournant (7) relié à la tige de réglage de la soupape de réduction de pression (20) et le verre indicateur de goutte d'huile (8) en disposition essentiellement diagonale l'un par rapport à l'autre.

3. Dispositif selon la revendication 2, caractérisé en ce que dans les autres régions d'angle supérieures du bloc (2) sont aménagés une vis d'ajustage (9) de la vanne de réglage du débit d'huile (39) et/ou un canal de remplissage d'huile (17) avec une vis de remplissage (11).

4. Dispositif suivant l'une des revendications 1 à 3, caractérisé en ce que la boîte à filtre (13) et le récipient à huile (14) sont entourés d'une gaine protectrice commune (24).

5. Dispositif selon l'une des revendications précédentes, caractérisé en ce que la boîte à filtre (13) et le récipient à huile (14) sont au moins partiellement constitués d'un matériau transparent.

6. Dispositif selon l'une des revendications précédentes, caractérisé en ce que le carter de soupape (1) sous la forme du bloc (2) est pourvu d'un canal traversant (27) croisant le canal de sortie d'air (4), et que le manomètre (6) peut être relié au choix à l'un ou l'autre de deux alésages filetés (26, 28) du canal (27) qui sont aménagés sur des surfaces opposées du bloc.

Fig. 1

7

8

43

9

6

1

3

2

18

25

12

16

Fig. 2

3

6

6

8

25

6

11

2

1

7

9

3

6

# Fig. 3

# Fig. 4

# Fig. 5

Fig. 6

7

42

8

43

44

9

41

1

39

45

3

46

A →

B →

4

38

30

37

27

2

34

22

23

18

19

14

35

12

36

16